# EUROPÄISCHE PATENTSCHRIFT

(11) **EP 3 766 721 B1**
(45) Veröffentlichungstag und Bekanntmachung des Hinweises auf die Patenterteilung: **31.12.2025**
(21) Anmeldenummer: 20173114.8
(22) Anmeldetag: 06.05.2020
(51) Int. Cl.: B60L 9/00, B60L 53/10, B60L 53/14, B60L 53/18, B60M 7/00, B61B 9/00, B61B 12/00, E01H 4/02, H02G 11/02

(54) **PISTENPFLEGEFAHRZEUG ZUR PFLEGE EINER PISTE**
SKI TRAIL MAINTENANCE VEHICLE
VÉHICULE D'ENTRETIEN DES PISTES PERMETTANT D'ENTRETENIR UNE PISTE

(30) Priorität: 19.07.2019 DE 102019210743
(43) Veröffentlichungstag der Anmeldung: 20.01.2021
(73) Patentinhaber: Kässbohrer Geländefahrzeug AG, 88471 Laupheim (DE)
(72) Erfinder: Mayer, Stephan, 89597 Munderkingen (DE)
(74) Vertreter: Patentanwälte Ruff, Wilhelm, Beier, Dauster & Partner mbB

(56) Entgegenhaltungen:
- AT-U1- 14 532
- DE-B4- 102009 024 644
- US-A- 4 587 383
- US-A- 4 700 023
- US-A1- 2014 027 228
- US-A1- 2018 118 039

## Beschreibung

Die Erfindung betrifft ein Pistenpflegefahrzeug mit den oberbegrifflichen Merkmalen des Anspruchs 1.

Aus der US 2018/118039 A1 ist ein Pistenpflegefahrzeug mit den oberbegrifflichen Merkmalen des Anspruchs 1 bekannt, wobei die Energieversorgungsleitung an eine stationäre elektrische Oberleitung angeschlossen ist. Zwecks Anschlusses ist eine an der stationären Oberleitung beweglich geführte Laufkatze vorhanden. Ausgehend von der beweglichen Laufkatze ist die Energieversorgungsleitung über einen Ausleger des Pistenpflegefahrzeugs geführt.

Aus der US 4 587 383 A ist eine selbstfahrende, elektrisch betriebene Maschine bekannt, die mit einem Stromkabel zur Stromversorgung ausgestattet ist. Das Stromkabel ist zwischen einem drehbaren Turm der Maschine und einem mobilen Kabelturm, der von der eigentlichen Maschine beabstandet ist, aufgehängt. Ausgehend von dem mobilen Kabelturm führt das Stromkabel zu einer entfernten Stromquelle. Der mobile Kabelturm kann mit der Maschine an unterschiedliche Aufstellorte transportiert werden.

Aus der AT 14 532 U1 und der DE 10 2009 024 644 B4 sind Pistenpflegefahrzeuge mit Seilwinden zur Zugkraftunterstützung an steilen Hängen bekannt.

Ein weiteres Pistenpflegefahrzeug ist aus der DE 296 07 651 U1 in Form eines Kettenfahrzeugs bekannt und zur Pflege einer Skipiste vorgesehen. Das bekannte Pistenpflegefahrzeug weist ein Antriebssystem mit einem elektrisch betriebenen Fahrantrieb auf. Zur Versorgung des Fahrantriebs ist eine Energieversorgungsleitung in Form eines Schleppkabels vorgesehen. Das Schleppkabel ist zur Energieversorgung des Antriebssystems an eine im Bereich der Piste stationär angeordnete Betriebsenergiequelle ankoppelbar.

Aufgabe der Erfindung ist es, ein Pistenpflegefahrzeug der eingangs genannten Art bereitzustellen, das eine möglichst uneingeschränkte Fortbewegung im Koppelbetrieb ermöglicht.

Diese Aufgabe wird durch das Bereitstellen eines Pistenpflegefahrzeugs mit den Merkmalen des Anspruch 1 gelöst. Durch die erfindungsgemäße Lösung wird vermieden, dass die Energieversorgungsleitung die Fortbewegung des Pistenpflegefahrzeugs im Koppelbetrieb einschränkt oder behindert. Hierzu ist erfindungsgemäß die der Energieversorgungsleitung zugeordnete Wickeleinrichtung vorgesehen. Die Energieversorgungsleitung ist auf- und abwickelbar an der Wickelvorrichtung gehalten. Bei der Fortbewegung des Pistenpflegefahrzeugs auf der Piste wird die Energieversorgungsleitung mittels der Wickeleinrichtung in einer auf die Fortbewegung angepassten Weise auf- und/oder abgewickelt. Hierdurch wird eine abgewickelte Länge der Energieversorgungsleitung in einer auf die Fortbewegung angepassten Weise verkürzt oder verlängert. Ein ungewolltes Schleppen oder Ziehen der Energieversorgungsleitung während der Fortbewegung wird hierdurch vermieden. Gleichzeitig kann durch das erfindungsgemäß angepasste Auf- und Abwickeln eine übermäßige Zugkraftbeanspruchung der Energieversorgungsleitung vermieden werden. Im Ergebnis ermöglicht die erfindungsgemäße Lösung eine vergleichsweise uneingeschränkte Fortbewegung des Pistenpflegefahrzeugs im Koppelbetrieb. Die Wickeleinrichtung ist zum Auf- und Abwickeln der Energieversorgungsleitung eingerichtet, wobei eine hierfür erforderliche Auf- und Abwickelbewegung der Wickelvorrichtung in Abhängigkeit der Fortbewegung des Pistenpflegefahrzeugs steuerbar ist. Die Auf- und Abwickelbewegung kann unmittelbar oder mittelbar in Abhängigkeit der Fortbewegung des Pistenpflegefahrzeugs steuerbar sein. Als eine mit der Fortbewegung zusammenhängende Eingangsgröße für die Steuerung kann beispielsweise wenigstens eine Bewegungsgröße des Pistenpflegefahrzeugs vorgesehen sein. Als Bewegungsgröße kommt insbesondere eine absolut oder inkrementell zurückgelegte Fahrstrecke, eine Fahrgeschwindigkeit oder eine Fahrbeschleunigung des Pistenpflegefahrzeugs in Betracht. Alternativ oder zusätzlich kann als Eingangsgröße eine aktuelle Position des Pistenpflegefahrzeugs relativ zu der stationären Betriebsenergiequelle vorgesehen sein. Weiter alternativ oder zusätzlich kann als Eingangsgröße eine auf die Energieversorgungsleitung wirkende Zugkraft vorgesehen sein. Einends ist die Energieversorgungsleitung elektrisch leitfähig mit dem Antriebssystem verbunden. Hierzu kann die Energieversorgungsleitung beispielsweise an einem Abschnitt der Wickeleinrichtung festgelegt und elektrisch leitfähig mit diesem verbunden sein, wobei der betreffende Abschnitt der Wickeleinrichtung seinerseits mit einer dem Antriebssystem zugeordneten elektrischen Zuleitung verbunden sein kann. Die Energieversorgungsleitung ist im Koppelbetrieb andernends elektrisch leitfähig mit der stationären Betriebsenergiequelle verbunden. Hierzu weist die Energieversorgungsleitung vorzugsweise eine Koppeleinrichtung auf, die im Koppelbetrieb lösbar elektrisch leitfähig mit einer komplementären Koppeleinrichtung der Betriebsenergiequelle zusammenwirkt. Vorzugsweise ist die Betriebsenergiequelle elektrisch leitfähig mit einem Stromnetz zur Stromversorgung einer Infrastruktur der Piste verbunden. Die Energieversorgungsleitung ist vorzugsweise zur Versorgung des gesamten Antriebssystems des Pistenpflegefahrzeugs vorgesehen. Das Antriebssystem kann neben dem Fahrantrieb beispielsweise Nebenaggregate sowie front- und/oder heckseitig angeordnete Pistenpflegegeräte vorsehen, die im Koppelbetrieb über die Energieversorgungsleitung mit elektrischer Betriebsenergie versorgt sein können. Auch die Wickeleinrichtung kann im Koppelbetrieb über die Energieversorgungsleitung mit elektrischer Betriebsenergie versorgt sein.

Weiter gemäß der Erfindung weist die Wickeleinrichtung eine drehbar gelagerte Wickeltrommel auf, an welcher die Energieversorgungsleitung auf- und abwickelbar gehalten ist. Die Wickeltrommel kann insbesondere auch als Haspel oder Spule bezeichnet werden. Die Wickeltrommel ist vorzugsweise auf einer Ladefläche des Pistenpflegefahrzeugs angeordnet. Alternativ kann die Wickeltrommel an einem front- oder heckseitigen Bereich des Pistenpflegefahrzeugs angeordnet sein. Die Wickeltrommel ist drehbar gelagert. Eine entsprechende Drehachse ist vorzugsweise parallel zu einer Querrichtung des Pistenpflegefahrzeugs orientiert. Dies ist eine konstruktiv besonders einfach umsetzbare und gegenüber äußeren Einflüssen robuste Ausgestaltung der Erfindung.

In weiterer Ausgestaltung der Erfindung ist der Wickeleinrichtung ein Auslegerarm zugeordnet, mittels dessen die Energieversorgungsleitung geführt ist. Der Auslegerarm dient einer verbesserten Führung der Energieversorgungsleitung beim Auf- und/oder Abwickeln im Koppelbetrieb. Dabei fungiert der Auslegerarm insbesondere als Abstandhalter, mittels dessen die Energieversorgungsleitung auf Abstand zu dem Pistenpflegefahrzeug im Übrigen gehalten ist. Vorzugsweise ist der Auslegerarm auf einer Ladefläche des Pistenpflegefahrzeugs angeordnet. Eine nochmals verbesserte Führung der Energieversorgungsleitung kann erreicht werden, wenn der Auslegerarm um wenigstens eine Schwenkachse schwenkbar gelagert ist. Die Schwenkachse ist vorzugsweise parallel zu einer Hochrichtung des Pistenpflegefahrzeugs orientiert.

In weiterer Ausgestaltung der Erfindung ist eine mit der Wickeleinrichtung verbundene Steuereinheit vorgesehen, die zur Steuerung einer Auf- und Abwickelbewegung der Wickeleinrichtung in Abhängigkeit der Fortbewegung des Pistenpflegefahrzeugs eingerichtet ist. Die Steuereinheit ist vorzugsweise eine elektrische oder elektronische Steuereinheit. Vorzugsweise ist die Steuereinheit als zentrale Einrichtung des Pistenpflegefahrzeugs gestaltet und somit zusätzlich zur Steuerung der Wickeleinrichtung zur Steuerung weiterer Einrichtungen des Pistenpflegefahrzeugs eingerichtet. Die Steuereinheit ist zur Steuerung in unmittelbarer oder mittelbarer Abhängigkeit der Fortbewegung des Pistenpflegefahrzeugs eingerichtet. Eine entsprechende Eingangsgröße der Steuerung kann somit mittelbar oder unmittelbar mit der Fortbewegung des Pistenpflegefahrzeugs in Zusammenhang stehen.

In weiterer Ausgestaltung der Erfindung ist eine mit der Steuereinheit verbundene Erfassungseinheit vorgesehen, die eingerichtet ist zur Erfassung einer Position des Pistenpflegefahrzeugs relativ zu der Betriebsenergiequelle und/oder einer Bewegungsgröße des Pistenpflegefahrzeugs und/oder einer auf die Energieversorgungsleitung wirkenden Zugkraft. Die mittels der Erfassungseinheit erfassten vorgenannten Größen können einzeln oder in beliebiger Kombination als Eingangsgröße für die Steuerung der Auf- und Abwickelbewegung der Wickeleinrichtung verwendet werden. Zur Erfassung der Position weist die Erfassungseinrichtung vorzugsweise eine GPS-Ortungseinrichtung auf. Ist eine stationäre Position der Betriebsenergiequelle bekannt und die Position des Pistenpflegefahrzeugs erfasst, kann hierdurch auf einfache Weise ein Abstand zwischen dem Pistenpflegefahrzeug und der Betriebsenergiequelle ermittelt werden. Der ermittelte Abstand lässt einen einfachen Rückschluss auf eine erforderliche auf- und/oder abzuwickelnde Länge der Energieversorgungsleitung zu. Die zu erfassende Bewegungsgröße kann eine absolut oder inkrementell zurückgelegte Fahrstrecke, eine Fahrgeschwindigkeit oder eine Fahrbeschleunigung des Pistenpflegefahrzeugs sein. Zur Erfassung der Bewegungsgröße weist die Erfassungseinheit vorzugsweise einen hierfür geeigneten Bewegungssensor auf. Alternativ oder zusätzlich kann die Bewegungsgröße auf grundsätzlich bekannte Weise unter Verwendung einer GPS-Ortungseinrichtung erfasst werden. Auf Grundlage der erfassten Bewegungsgröße kann auf einen Abstand zwischen dem Pistenpflegefahrzeug und der Betriebsenergiequelle und damit auf die erforderliche auf- und/oder abzuwickelnde Länge der Energieversorgungsleitung geschlossen werden. Zur Erfassung der auf die Energieversorgungsleitung wirkenden Zugkraft weist die Erfassungseinheit vorzugsweise eine hierfür geeignete Kraft- bzw. Spannungsmesseinrichtung auf. Solche Messeinrichtungen sind beispielsweise in Form von Dehnungsmessstreifen als solche grundsätzlich bekannt. Unterschreitet die erfasste Zugkraft einen vorbestimmten Mindestwert, kann die Wickeleinrichtung zum Aufwickeln der Energieversorgungsleitung angesteuert werden. Überschreitet die erfasste Zugkraft einen vorbestimmten Maximalwert, kann die Wickeleinrichtung zum Abwickeln der Energieversorgungsleitung angesteuert werden.

Weiter gemäß der Erfindung ist ein Zugseil zur Zugkraftunterstützung der Fortbewegung des Pistenpflegefahrzeugs vorgesehen, wobei das Zugseil mittels der Wickeleinrichtung auf- und abwickelbar ist. Die Zugkraftunterstützung von Pistenpflegefahrzeugen mittels Zugseilen ist grundsätzlich bekannt und kommt insbesondere bei der Pflege steiler Pisten zur Anwendung. Dabei ist vorgesehen, dass das Zugseil einends stationär an einem oberen bzw. hangseitigen Bereich der Piste festgelegt wird. Es ist vorteilhaft, wenn das Zugseil im Bereich der Betriebsenergiequelle einends lösbar festgelegt ist. Andernends ist das Zugseil auf- und abwickelbar an dem Pistenpflegefahrzeug gehalten. Bei dieser Ausgestaltung der Erfindung kommt der Wickeleinrichtung eine besonders vorteilhafte Mehrfachfunktion zu. Denn zum einen dient die Wickeleinrichtung dem Auf- und Abwickeln der Energieversorgungsleitung. Zum anderen dient die Wickeleinrichtung zusätzlich dem Auf- und Abwickeln des Zugseils. Hierdurch kann auf gesonderte Wickeleinrichtungen verzichtet und ein besonders einfacher und bauraumsparender Aufbau erreicht werden.

Weiter gemäß der Erfindung ist das Zugseil auf der Wickeltrommel auf- und abwickelbar gehalten. Der Wickeltrommel kommt somit eine besonders vorteilhafte Mehrfachfunktion zu. Denn zum einen ist die Energieversorgungsleitung und zum anderen ist zusätzlich das Zugseil auf- und abwickelbar auf der Wickeltrommel gehalten. Somit kann auf gesonderten Wickeltrommeln verzichtet und ein nochmals vereinfachter und zusätzlich bauraumsparender Aufbau erreicht werden.

In weiterer Ausgestaltung der Erfindung ist das Zugseil mittels des Auslegerarms geführt. Durch diese Ausgestaltung der Erfindung kann auf gesonderte Auslegerarme verzichtet werden. Stattdessen sind sowohl die Energieversorgungsleitung als auch das Zugseil mittels des Auslegerarms geführt. Dies erlaubt einen nochmals vereinfachten und besonders bauraumsparenden Aufbau.

In weiterer Ausgestaltung der Erfindung bilden das Zugseil und die Energieversorgungsleitung im Koppelbetrieb eine wenigstens abschnittsweise parallel erstreckte Stranganordnung. Bei dieser Ausgestaltung der Erfindung sind das Zugseil und die Energieversorgungsleitung voneinander getrennt ausgebildet. Im Koppelbetrieb sind das Zugseil und die Energieversorgungsleitung unter Ausbildung der Stranganordnung zwischen der Wickeleinrichtung und der Betriebsenergiequelle erstreckt. Dabei bildet das Zugseil einen ersten Strang und die Energieversorgungsleitung einen zweiten Strang der Stranganordnung. Durch die parallele Erstreckung als Stranganordnung können eine platzsparende Führung sowie ein platzsparendes Auf- und Abwickeln des Zugseils und der Energieversorgungsleitung erreicht werden.

In weiterer Ausgestaltung der Erfindung ist die Energieversorgungsleitung wenigstens abschnittsweise auf dem Zugseil abgestützt, wobei das Zugseil ein Tragseil zur Stützung der Energieversorgungsleitung bildet. Zur Abstützung auf dem Zugseil ist die Energieversorgungsleitung vorzugsweise an in Längsrichtung des Zugseils voneinander beabstandeten Fügestellen mit dem Zugseil zusammengefügt. Hierfür können entsprechende Befestigungsmittel vorgesehen sein. Alternativ oder zusätzlich kann die Energieversorgungsleitung um das Zugseil gewunden sein oder umgekehrt. Durch diese Ausgestaltung der Erfindung wird eine übermäßige Beanspruchung der Energieversorgungsleitung vermieden. Hierdurch kann die Energieversorgungsleitung im Hinblick auf ihre mechanischen Eigenschaften gegenüber einer nicht abgestützten Ausgestaltung vergleichsweise schwächer dimensioniert werden.

In weiterer Ausgestaltung der Erfindung sind das Zugseil und die Energieversorgungsleitung in einem gemeinsamen Strangquerschnitt integriert. Bei dieser Ausgestaltung der Erfindung ist somit anstelle zweier gesonderter Stränge lediglich ein gemeinsamer Strang vorgesehen. Dies ist eine besonders vorteilhafte Ausgestaltung der Erfindung, da insbesondere auf ein gesondertes Auf- und Abwickeln sowie hierfür vorgesehene gesonderte Einrichtungen verzichtet werden kann. Mit anderen Worten ausgedrückt kann bei dieser Ausgestaltung der Erfindung die Funktion der elektrischen Energieübertragung in das Zugseil integriert sein und/oder die Funktion der Zugkraftübertragung kann in die Energieversorgungsleitung integriert sein.

In weiterer Ausgestaltung der Erfindung weist das Antriebssystem eine Pufferenergiequelle auf, mittels derer wenigstens der Fahrantrieb hilfsweise mit elektrischer Betriebsenergie versorgt ist, sofern kein Koppelbetrieb vorliegt. Die Pufferenergiequelle dient insbesondere zur Energieversorgung des Fahrantriebs bei der Überbrückung kürzerer Distanzen, während derer keine stationär angeordnete Betriebsenergiequelle zur Verfügung steht. Die Pufferenergiequelle kann zudem zur Energieversorgung weiterer Aggregate des Antriebssystems eingerichtet sein. Die Pufferenergiequelle kann insbesondere einen Verbrennungsmotor, eine Brennstoffzelle oder ein Batteriesystem zur Bereitstellung der elektrischen Betriebsenergie aufweisen.

In weiterer Ausgestaltung der Erfindung weist die Pufferenergiequelle ein Batteriesystem auf, das im Koppelbetrieb und/oder mittels Rekuperation aufladbar ist. Bei dieser Ausgestaltung der Erfindung kann gänzlich auf verbrennungsmotorische Einheiten verzichtet werden. Das Batteriesystem ist vorteilhafterweise derart gestaltet, dass die gespeicherte Menge an elektrischer Betriebsenergie lediglich zur Überbrückung vergleichsweise kurzer Distanzen ausreicht. Hierdurch kann das Batteriesystem vergleichsweise klein und gewichtssparend dimensioniert werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Darstellung einer Ausführungsform eines erfindungsgemäßen Pistenpflegefahrzeugs in Form einer Pistenraupe zur Bearbeitung und Pflege von Ski- und Snowboardpisten,
- Fig. 2: in schematischer, teilweise abgeschnittener Darstellung die Pistenraupe nach Fig. 1 in einem Koppelbetrieb, in welchem eine Energieversorgungsleitung elektrisch leitend an eine stationär im Bereich der Piste angeordnete Betriebsenergiequelle angeschlossen ist,
- Fig. 3: in schematisch stark vereinfachter Querschnittsdarstellung die Energieversorgungsleitung der Pistenraupe nach den Fig. 1 und 2 zusammen mit einem Zugseil zur Zugkraftunterstützung und
- Fig. 4: in schematischer Querschnittsdarstellung eine alternative Ausgestaltung der Energieversorgungsleitung.

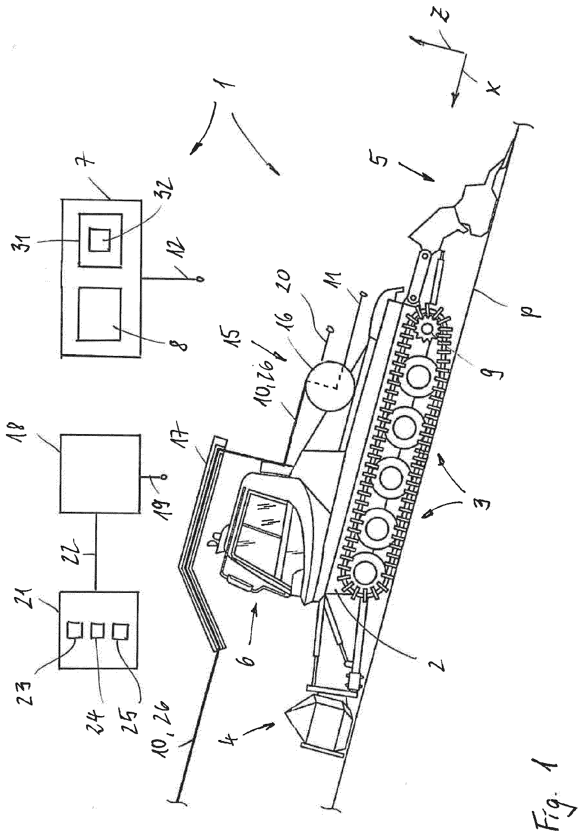

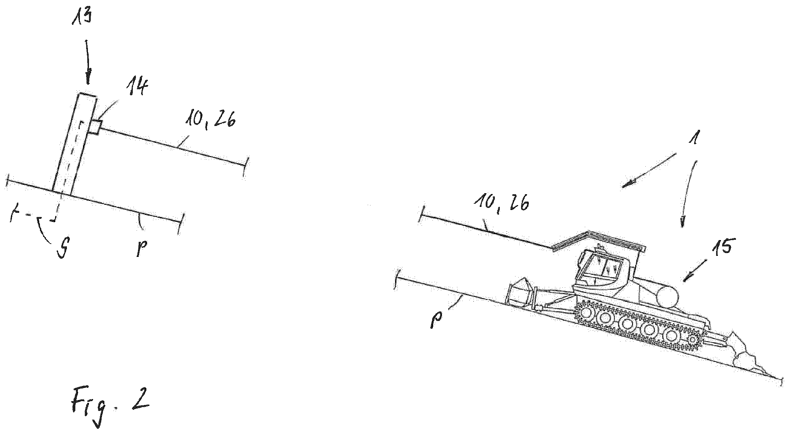

Gemäß den Fig. 1 und 2 ist ein Pistenpflegefahrzeug 1 zur Pflege einer Piste P vorgesehen. Bei der gezeigten Ausführungsform ist das Pistenpflegefahrzeug als Pistenraupe 1 gestaltet und auf grundsätzlich bekannte Weise zur Pflege und Bearbeitung von mit Schnee bedeckten Ski- und/oder Snowboardpisten vorgesehen.

Die Pistenraupe 1 weist einen als solchen grundsätzlich bekannten Aufbau mit einem Tragrahmen 2, einem unterseitig an dem Tragrahmen 2 angeordneten Kettenlaufwerk 3 sowie mit einem Räumschild 4 und einem Pistenbearbeitungsgerät 5 auf. Das Räumschild 4 ist frontseitig an dem Tragrahmen 2 angeordnet. Das Pistenbearbeitungsgerät ist in Form einer heckseitig an dem Tragrahmen 2 angeordneten Heckfräse 5 gestaltet. Weiter weist die Pistenraupe 1 in grundsätzlich bekannter Weise eine Fahrerkabine 6 und eine nicht näher bezeichnete in Längsrichtung X hinter der Fahrerkabine 6 und in Hochrichtung Z oberhalb des Tragrahmens 2 angeordnete Lade- und Funktionsfläche auf.

Weiter weist die Pistenraupe 1 ein Antriebssystem 7 auf, das anhand Fig. 1 lediglich schematisch angedeutet und aus zeichnerischen Gründen außerhalb der dargestellten Baustruktur der Pistenraupe 1 eingezeichnet ist. Das Antriebssystem 7 dient insbesondere einem Antrieb des Kettenlaufwerks 3 und weist einen elektrisch betriebenen Fahrantrieb 8 auf, der zur angetriebenen Fortbewegung der Pistenraupe 1 vorgesehen ist. Der Fahrantrieb 8 arbeitet bei der gezeigten Ausführungsform auf ein Turasrad 9 des Kettenlaufwerks 3 und ist in Form eines elektrischen Antriebs gestaltet.

Das Antriebssystem 7 kann weitere elektrisch betriebene Antriebe aufweisen, die beispielsweise zur stellbeweglichen Verlagerung des Räumschilds 4 und/oder zum Betrieb der Heckfräse 5 vorgesehen sein können. Diese weiteren Antriebe können beispielsweise in Form eines Elektromotors oder eines elektrohydraulischen Antriebs gestaltet sein.

Weiter ist zur Versorgung des Antriebssystems 7 mit elektrischer Betriebsenergie eine flexible Energieversorgungsleitung 10 vorgesehen. Die Energieversorgungsleitung 10 ist auf noch näher beschriebene Weise spezifisch gestaltet und in einem Koppelbetrieb der Pistenraupe 1 einends elektrisch leitend mit dem Antriebssystem 7 verbunden. Diese elektrisch leitfähige Verbindung ist anhand der Leitungsabschnitte 11 und 12 schematisch verdeutlich, die auf zeichnerisch nicht näher dargestellte Weise elektrisch leitfähig kontaktiert sind. Andernends ist die Energieversorgungsleitung 10 mit einer im Bereich der Piste P stationär angeordneten Betriebsenergiequelle 13 elektrisch leitend verbunden (Fig. 2). Bei der gezeigten Ausführungsform ist die Betriebsenergiequelle 13 in einem oberen und damit hangseitigen Bereich der Piste P angeordnet und fest im Boden verankert. Die Betriebsenergiequelle 13 stellt die zum Betrieb der Pistenraupe 1 erforderliche elektrische Betriebsenergie zur Verfügung und ist zu diesem Zweck vorliegend an ein Stromnetz S angeschlossen. Das Stromnetz S ist auf grundsätzlich bekannte Weise im Bereich der Piste P verlegt. Zur elektrisch leitfähigen Verbindung zwischen der Betriebsenergiequelle 13 und der Energieversorgungsleitung 10 ist eine Koppeleinrichtung 14 vorgesehen. Mittels der Koppeleinrichtung 14 ist die Energieversorgungsleitung lösbar an einer nicht näher ersichtlichen komplementären Koppeleinrichtung der Betriebsenergiequelle 13 festgelegt und mit dem Stromnetz S kontaktiert.

Weiter ist eine der Energieversorgungsleitung 10 zugeordnete Wickeleinrichtung 15 vorgesehen. Mittels der Wickeleinrichtung 15 ist die Energieversorgungsleitung 10 im Koppelbetrieb in einer auf die Fortbewegung der Pistenraupe 1 abgestimmten Weise auf- und abwickelbar. Durch das auf die Fortbewegung der Pistenraupe 1 abgestimmte Auf- und Abwickeln der Energieversorgungsleitung 10 wird eine möglichst uneingeschränkte Fortbewegung der Pistenraupe 1 auf der Piste P erreicht. Insbesondere wird hierbei ein ungewolltes Schleppen oder Ziehen der Energieversorgungsleitung 10 vermieden. Ebenso wird ein unbeabsichtigtes Überfahren der Energieversorgungsleitung 10 mit der Pistenraupe 1 vermieden. Weiter wird eine übermäßige mechanische Beanspruchung der Energieversorgungsleitung 10 vermieden.

Bei der gezeigten Ausführungsform weist die Wickeleinrichtung 15 eine drehbar gelagerte Wickeltrommel 16 auf. Die Energieversorgungsleitung 10 ist auf- und abwickelbar an der Wickeltrommel 16 gehalten. Dabei ist die Energieversorgungsleitung 10 einends elektrisch leitfähig an einem nicht näher ersichtlichen Abschnitt der Wickeltrommel 16 festgelegt, der seinerseits elektrisch leitfähig mit dem Leitungsabschnitt 11 kontaktiert ist. Hierfür kann die Wickeltrommel 16 auf grundsätzlich bekannte Weise mit einem Gleitkontakt zur elektrischen Leistungsübertragung zwischen einem rotierenden und einem feststehenden Bauteil versehen sein. Die Wickeltrommel 16 ist vorliegend um eine nicht näher bezeichnete Drehachse drehbar an der Pistenraupe 1 im Übrigen gelagert, wobei die Drehachse parallel zu einer Querrichtung der Pistenraupe 1 orientiert ist. Weiter ist die Wickeltrommel 16 vorliegend im Bereich der Lade- und Funktionsfläche der Pistenraupe 1 angeordnet.

Weiter ist der Wickeleinrichtung 15 ein Auslegerarm 17 zugeordnet. Der Auslegerarm 17 ist auf nicht näher gezeigte Weise um eine parallel zur Hochrichtung Z orientierte Drehachse drehbar an der Lade- und Funktionsfläche gelagert und dient einer Führung der Energieversorgungsleitung 10. Mittels des Auslegerarms 17 wird die Energieversorgungsleitung 10 bei der Fortbewegung der Pistenraupe 1 über die übrigen Bauteile und/oder Abschnitte der Pistenraupe 1 hinweggeführt und auf Abstand gehalten. Hierdurch ist die Energieversorgungsleitung 10 freigängig und ohne eine ungewollte Berührung der sonstigen Bauteile und/oder Abschnitte der Pistenraupe 1 auf der Wickeltrommel 16 auf- und abwickelbar. In der anhand Fig. 1 gezeigten Konfiguration ist die Energieversorgungsleitung 10 mittels des Auslegerarms 17 in Hochrichtung Z und in Längsrichtung X über die Fahrerkabine 6 hinweggeführt.

Wie weiter anhand Fig. 1 ersichtlich ist, weist die Pistenraupe 1 eine mit der Wickeleinrichtung 15 verbundene Steuereinheit 18 auf. Die Steuereinheit 18 ist in einer dem Antriebssystem 7 entsprechenden Weise schematisch stark vereinfacht und aus zeichnerischen Gründen außerhalb der Baustruktur der Pistenraupe 1 eingezeichnet. Die Steuereinheit 18 ist zur Steuerung der Auf- und Abwickelbewegung der Wickeleinrichtung 15 in Abhängigkeit der Fortbewegung der Pistenraupe 1 eingerichtet. Hierzu ist die Steuereinheit 18 mittels - anhand Fig. 1 schematisch angedeuteter - Signalleitungsabschnitte 19, 20 mit der Wickeltrommel 16 verbunden. Die Signalleitungsabschnitte 19, 20 sind auf zeichnerisch nicht näher dargestellte Weise zur Übertragung entsprechender Steuersignale miteinander verbunden. Diese Verbindung kann drahtgebunden oder drahtlos ausgebildet sein.

Weiter ist eine mit der Steuereinheit 18 verbundene Erfassungseinheit 21 vorgesehen. Die Erfassungseinheit 21 ist in einer der Steuereinheit 18 entsprechenden Weise schematisch stark vereinfacht dargestellt und außerhalb der Baustruktur der Pistenraupe 1 eingezeichnet. Die Erfassungseinheit 21 ist vereinfacht ausgedrückt zur Erfassung der Fortbewegung der Pistenraupe 1 auf der Piste P eingerichtet. Die mittels der Erfassungseinheit 21 erfassten und noch näher zu beschreibenden Erfassungsgrößen werden der Ansteuerung der Wickeleinrichtung 15 mittels der Steuereinheit 18 zugrunde gelegt. Die Erfassungseinheit 21 ist mittels einer Signalleitung 22 mit der Steuereinheit 18 verbunden. Die Signalleitung 22 ist vorliegend drahtgebunden ausgeführt und kann alternativ drahtlos gestaltet sein.

Die Erfassungseinheit 21 ist bei der gezeigten Ausführungsform zur Erfassung der Position der Pistenraupe 1 auf der Piste P eingerichtet. Zu diesem Zweck weist die Erfassungseinheit 21 eine GPS-Ortungseinrichtung 23 auf. Die GPS-Ortungseinrichtung 23 ist hinsichtlich ihres Aufbaus und ihrer Funktionsweise grundsätzlich bekannt und dient einer satellitengestützten Ortung der Pistenraupe 1. Auf diese Weise ist die aktuelle Position der Pistenraupe 1 auf einfache Weise und hinreichend präzise erfassbar. Die Auf- und Abwickelbewegung der Wickeleinrichtung 15 kann somit in Abhängigkeit der aktuellen Position der Pistenraupe 1 gesteuert werden. Hierzu kann die aktuelle Position der Pistenraupe 1 mit einer bekannten, stationären Position der Betriebsenergiequelle 13 abgeglichen werden. Auf Grundlage eines solchen Abgleichs ist ein Abstand zwischen der Pistenraupe 1 und der Betriebsenergiequelle und damit eine erforderliche auf- und/oder abzuwickelnde Länge der Energieversorgungsleitung 10 auf einfache Weise ermittelbar.

Die Erfassungseinheit 21 ist bei der gezeigten Ausführungsform zusätzlich zur Erfassung einer Bewegungsgröße der Fortbewegung der Pistenraupe 1 eingerichtet. Die zu erfassende Bewegungsgröße kann beispielsweise eine inkrementell oder absolut zurückgelegte Strecke, Geschwindigkeit oder Beschleunigung der Fortbewegung sein. Zu diesem Zweck weist die Erfassungseinheit 21 einen Bewegungssensor 24 auf. Der Bewegungssensor 24 ist vorliegend ein Beschleunigungssensor, der eine grundsätzlich bekannte Gestaltung und Funktionsweise aufweist. Unter Berücksichtigung der mittels des Beschleunigungssensors 24 erfassten Beschleunigung der Pistenraupe 1 kann auf eine Veränderung eines Abstands zwischen der Pistenraupe 1 und der Betriebsenergiequelle 13 geschlossen werden.

Weiter ist die Erfassungseinheit 21 vorliegend zur Erfassung einer auf die Energieversorgungsleitung 10 wirkenden Zugkraft eingerichtet. Hierfür weist die Erfassungseinheit 21 einen Dehnungsmesssensor 25 mit grundsätzlich bekannter Gestaltung und Funktionsweise auf. Der Dehnungsmesssensor 25 ist auf zeichnerisch nicht näher dargestellte Weise mit der Energieversorgungsleitung 10 wirkverbunden und gestattet die Erfassung der auf die Energieversorgungsleitung wirkenden Zugkraft. Übersteigt die erfasste Zugkraft einen vorbestimmten Grenzwert, wird die Wickeleinrichtung 15 zu einer entsprechenden Abwicklung der Energieversorgungsleitung 10 angesteuert. Hierdurch wird eine übermäßige Zugbeanspruchung der Energieversorgungsleitung 10 im Koppelbetrieb vermieden. Unterschreitet die erfasste Zugkraft einen vorbestimmten Grenzwert, wird die Wickeleinrichtung 15 zu einem entsprechenden Aufwickeln der Energieversorgungsleitung 10 angesteuert. Hierdurch wird ein übermäßiges Durchhängen oder gar Schleppen der Energieversorgungsleitung 10 im Koppelbetrieb vermieden.

Dies vorangestellt erfolgt die Ansteuerung der Wickeleinrichtung 15 mittels der Steuereinheit 18 derart, dass die Energieversorgungsleitung 10 bei einer Annäherung der Pistenraupe 1 an die Betriebsenergiequelle 13 in einer auf die Annäherung abgestimmten Weise auf der Wickeltrommel 16 aufgewickelt und somit verkürzt wird. Entfernt sich die Pistenraupe 1 demgegenüber bei ihrer Fortbewegung von der Betriebsenergiequelle 13, wird die Energieversorgungsleitung 10 in einer auf die zunehmende Entfernung abgestimmten Weise von der Wickeltrommel 16 abgewickelt, so dass die abgewickelte Länge der Energieversorgungsleitung erhöht wird.

Bei der gezeigten Ausführungsform ist zudem ein Zugseil 26 vorgesehen. Das Zugseil 26 dient einer Zugkraftunterstützung der Fortbewegung der Pistenraupe 1 auf der Piste P. Eine solche Zugkraftunterstützung ist als solches grundsätzlich bekannt und kommt insbesondere bei der Pflege und Bearbeitung vergleichsweise steiler Pisten zum Einsatz.

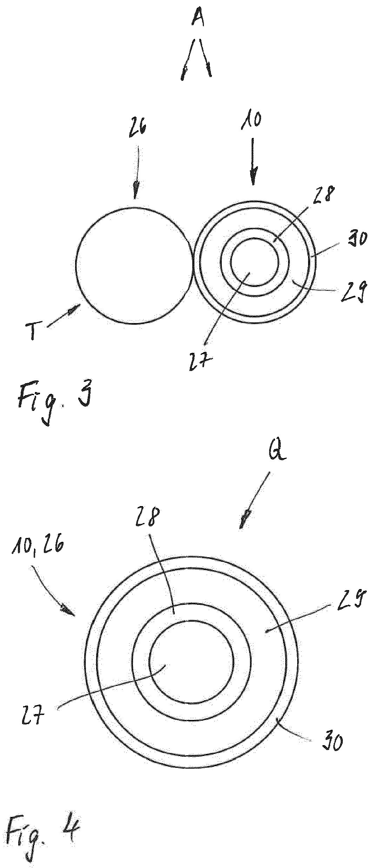

Wie anhand Fig. 4 verdeutlicht ist, sind das Zugseil 26 und die Energieversorgungsleitung 10 vorliegend in einen gemeinsamen Strangquerschnitt Q integriert. Mit anderen Worten ausgedrückt sind das Zugseil 26 und die Energieversorgungsleitung 10 in einem einzigen Strang 10, 26 zusammengefasst ausgebildet. Dieser Strang 10, 26 dient zum einen der besagten Zugkraftunterstützung und zum anderen der Energieversorgung.

Die anhand Fig. 4 ersichtliche Gestaltung des Strangs 10, 26 ist als rein exemplarisch zu verstehen und weist einen in radialer Richtung innenliegenden Kern 27, eine den Kern 27 in Umfangsrichtung umgebende erste Isolationsschicht 28, eine die Isolationsschicht 28 umgebende Mantelschicht 29 sowie eine radial außenliegende zweite Isolationsschicht 30 auf. Der Kern 27 und die Mantelschicht 29 sind jeweils aus einem elektrisch leitfähigen Metall gefertigt. Vorliegend ist hierfür Stahl gewählt. Die erste Isolationsschicht 28 und die zweite Isolationsschicht 30 sind jeweils aus einem elektrisch nicht leitfähigen Werkstoff gefertigt. Vorliegend ist hierfür ein geeigneter Kunststoff gewählt. Der Kern 27 und die Mantelschicht 29 sind jeweils aus nicht näher ersichtlichen Drahtlitzen gebildet, die auf grundsätzlich bekannte Weise miteinander verflochten bzw. verdrillt sind. Bei der gezeigten Ausführungsform sind sowohl der Kern 27 als auch die Mantelschicht 29 in einer für Zugseile für Pistenraupen üblichen Weise auf Zug beanspruchbar. Gleichzeitig bilden der Kern 27 und die Mantelschicht 29 vereinfacht ausgedrückt eine zweiadrige Leitung zur elektrischen Leistungsübertragung von der Betriebsenergiequelle 13 zu dem Antriebssystem 7.

Bei der gezeigten Ausführungsform ist die Koppeleinrichtung 14 dementsprechend zusätzlich zur mechanischen Zugkraftübertragung eingerichtet und die Betriebsenergiequelle 13 bildet gleichzeitig eine feste, pistenseitige Verankerung des Zugseils 26 bzw. des Strangs 10, 26.

Das auf die vorbeschriebene Weise in den Strang 10, 26 integrierte Zugseil 26 ist bei der gezeigten Ausführungsform mittels des Auslegerarms 17 geführt und gemeinsam mit der Energieversorgungsleitung 10 auf der Wickeltrommel 16 gehalten.

Vor obigem Hintergrund versteht sich, dass die Energieversorgungsleitung 10 in eine grundsätzlich bekannte Seilwindenanordnung zur Zugkraftunterstützung der Fortbewegung der Pistenraupe 1 integriert werden kann. Solche Seilwindenanordnungen sind als solche grundsätzlich bekannt und weisen üblicherweise eine gesteuert angetriebene Wickeltrommel sowie einen Auslegerarm auf.

Wie weiter anhand Fig. 1 gezeigt ist, weist das Antriebssystem 7 eine Pufferenergiequelle 31 auf. Mittels der Pufferenergiequelle ist der Fahrantrieb 8 hilfsweise mit elektrischer Betriebsenergie versorgt, sofern kein Koppelbetrieb vorliegt. Auf diese Weise kann die Pistenraupe 1 beispielsweise kürzere oder längere Distanzen zwischen einzelnen Pisten oder Pistenabschnitten überbrücken, ohne hierfür mittels der Energieversorgungsleitung 10 an eine stationäre Betriebsenergiequelle angeschlossen zu sein müssen.

Vorliegend ist die Pufferenergiequelle 31 derart gestaltet, dass lediglich vergleichsweise kürzere Distanzen überbrückbar sind. Hierfür weist die Pufferenergiequelle 31 ein Batteriesystem 32 auf. Das Batteriesystem 32 ist im Koppelbetrieb aufladbar. Zusätzlich ist vorgesehen, dass das Batteriesystem 32 im Schiebebetrieb der Pistenraupe, insbesondere bei Bergabfahrt, mittels Rekuperation aufladbar ist.

Anhand Fig. 3 ist eine alternative Anordnung der Energieversorgungsleitung 10 und des Zugseils 26 dargestellt. Bei dieser alternativen Ausführungsform bildet das Zugseil 26 ein Tragseil T für die Energieversorgungsleitung 10. Die Energieversorgungsleitung 10 als solche weist eine der Stranganordnung 10, 26 (Fig. 4) entsprechende Gestaltung mit einem Kern 27, einer ersten Isolationsschicht 28, einer Mantelschicht 29 und einer zweiten Isolationsschicht 30 auf. Allerdings fungieren der Kern 27 und die Mantelschicht 29 bei der anhand Fig. 3 gezeigten Anordnung lediglich als elektrische Leiter und dienen demnach nicht einer Zugkraftübertragung.

Bei der anhand Fig. 3 gezeigten Ausführungsform bilden das Zugseil 26 und die Energieversorgungsleitung 10 somit eine Stranganordnung A mit zwei als solchen grundsätzlich voneinander getrennten Strängen. Der erste Strang, nämlich das Zugseil 26, und der zweite Strang, nämlich die Energieversorgungsleitung 10, werden voneinander getrennt gefertigt und sind im betriebsfertig montierten Zustand gemeinsam auf der Wickeltrommel 16 gehalten. Die Energieversorgungsleitung 10 ist abschnittsweise auf dem Zugseil 26 abgestützt. Hierfür kann die Energieversorgungsleitung 10 mittels geeigneter Befestigungselemente, die in Längsrichtung der Stranganordnung A voneinander beabstandet angeordnet sein können, an mehreren Stellen mit dem Zugseil 26 verbunden sein. Auf diese Weise trägt das Zugseil 26 die Energieversorgungsleitung 10. Gegenüber einer nicht an dem Zugseil 26 getragenen Gestaltung kann die Energieversorgungsleitung 10 vergleichsweise schwächer im Hinblick auf ihre mechanische Beanspruchbarkeit dimensioniert werden.

## Patentansprüche

1. Pistenpflegefahrzeug (1) zur Pflege einer mit Schnee bedeckten Ski- und/oder Snowboardpiste (P), aufweisend ein Antriebssystem (7) mit wenigstens einem elektrisch betriebenen Fahrantrieb (8), der zur Fortbewegung des Pistenpflegefahrzeugs (1) vorgesehen ist, und aufweisend eine flexible Energieversorgungsleitung (10), die zur Versorgung des Antriebssystems (7) mit elektrischer Betriebsenergie vorgesehen ist, wobei ein Koppelbetrieb vorgesehen ist, in welchem die Energieversorgungsleitung (10) einends mit dem Antriebssystem (7) und andernends mit einer im Bereich der Piste (P) stationär angeordneten Betriebsenergiequelle (13) elektrisch leitend verbunden ist, wobei eine der Energieversorgungsleitung zugeordnete Wickeleinrichtung (15) vorgesehen ist, mittels derer die Energieversorgungsleitung (10) im Koppelbetrieb in einer auf die Fortbewegung des Pistenpflegefahrzeugs (1) abgestimmten Weise auf- und abwickelbar ist, wobei die Wickeleinrichtung (15) eine drehbar gelagerte Wickeltrommel (16) aufweist, an welcher die Energieversorgungsleitung (10) auf- und abwickelbar gehalten ist, **dadurch gekennzeichnet, dass** ein Zugseil (26) zur Zugkraftunterstützung der Fortbewegung des Pistenpflegefahrzeugs (1) vorgesehen ist, wobei das Zugseil (26) mittels der Wickeleinrichtung (15) auf- und abwickelbar auf der Wickeltrommel (16) gehalten ist.

2. Pistenpflegefahrzeug (1) nach Anspruch 1, **dadurch gekennzeichnet, dass** der Wickeleinrichtung (15) ein Auslegerarm (16) zugeordnet ist, mittels dessen die Energieversorgungsleitung (10) geführt ist.

3. Pistenpflegefahrzeug (1) nach Anspruch 1 oder 2, **dadurch gekennzeichnet, dass** eine mit der Wickeleinrichtung (15) verbundene Steuereinheit (18) vorgesehen ist, die zur Steuerung einer Auf- und Abwickelbewegung der Wickeleinrichtung (15) in Abhängigkeit der Fortbewegung des Pistenpflegefahrzeugs eingerichtet ist.

4. Pistenpflegefahrzeug (1) nach Anspruch 3, **dadurch gekennzeichnet, dass** eine mit der Steuereinheit (18) verbundene Erfassungseinheit (21) vorgesehen ist, die eingerichtet ist zur Erfassung einer Position des Pistenpflegefahrzeugs (1) relativ zu der Betriebsenergiequelle (13) und/oder einer Bewegungsgröße des Pistenpflegefahrzeugs (1) und/oder einer auf die Energieversorgungsleitung (10) wirkenden Zugkraft.

5. Pistenpflegefahrzeug (1) nach Anspruch 2, **dadurch gekennzeichnet, dass** das Zugseil (26) mittels des Auslegerarms (17) geführt ist.

6. Pistenpflegefahrzeug (1) nach einem der vorhergehenden Ansprüche, **dadurch gekennzeichnet, dass** das Zugseil (26) und die Energieversorgungsleitung (10) im Koppelbetrieb eine wenigstens abschnittsweise parallel erstreckte Stranganordnung (A) bilden.

7. Pistenpflegefahrzeug (1) nach Anspruch 6, **dadurch gekennzeichnet, dass** die Energieversorgungsleitung (10) wenigstens abschnittsweise auf dem Zugseil (26) abgestützt ist, wobei das Zugseil (26) ein Tragseil (T) zur Stützung der Energieversorgungsleitung (10) bildet.

8. Pistenpflegefahrzeug (1) nach einem der vorhergehenden Ansprüche, **dadurch gekennzeichnet, dass** das Zugseil (26) und die Energieversorgungsleitung (10) in einem gemeinsamen Strangquerschnitt (Q) integriert sind.

9. Pistenpflegefahrzeug (1) nach einem der vorhergehenden Ansprüche, **dadurch gekennzeichnet, dass** das Antriebssystem (7) eine Pufferenergiequelle (31) aufweist, mittels derer wenigstens der Fahrantrieb (8) hilfsweise mit elektrischer Betriebsenergie versorgt ist, sofern kein Koppelbetrieb vorliegt.

10. Pistenpflegefahrzeug (1) nach Anspruch 9, **dadurch gekennzeichnet, dass** die Pufferenergiequelle (31) ein Batteriesystem (32) aufweist, das im Koppelbetrieb und/oder mittels Rekuperation aufladbar ist.

## Claims

1. A piste maintenance vehicle (1) for maintaining a snow-covered ski and/or snowboard piste (P), having a drive system (7) with at least one electrically operated track drive (8) provided for locomotion of the piste maintenance vehicle (1) and having a flexible power supply line (10) provided for supplying the drive system (7) with electrical operating energy, wherein a coupled operation is provided in which the power supply line (10) is connected in electrically conducting manner at one end to the drive system (7) and at the other end to an operating energy source (13) arranged stationarily in the area of the piste (P), wherein a winding device (15) associated with the power supply line is provided by means of which the power supply line (10) is, during coupled operation, windable and unwindable to match the locomotion of the piste maintenance vehicle (1), wherein the winding device (15) has a rotatably mounted winding drum (16) on which the power supply line (10) is held windably and unwindably, **characterized in that** a traction cable (26) is provided to assist the traction force for locomotion of the piste maintenance vehicle (1), wherein the traction cable (26) is held on the winding drum (16) windably and unwindably by means of the winding device (15).

2. The piste maintenance vehicle (1) according to claim 1, **characterized in that** an extension arm (17), by means of which the power supply line (10) is guided, is associated with the winding device (15).

3. The piste maintenance vehicle (1) according to claim 1 or 2, **characterized in that** a control unit (18) connected to the winding device (15) is provided and is configured to control a winding and unwinding movement of the winding device (15) depending on the locomotion of the piste maintenance vehicle.

4. The piste maintenance vehicle (1) according to claim 3, **characterized in that** a detection unit (21) connected to the control unit (18) is provided and is configured to detect a position of the piste maintenance vehicle (1) relative to the operating energy source (13) and/or a movement amount of the piste maintenance vehicle (1) and/or a traction force acting on the power supply line (10).

5. The piste maintenance vehicle (1) according to claim 2, **characterized in that** the traction cable (26) is guided by means of the extension arm (17).

6. The piste maintenance vehicle (1) according to any of the preceding claims, **characterized in that** the traction cable (26) and the power supply line (10) form a strand arrangement (A) extending parallel in at least some sections during coupled operation.

7. The piste maintenance vehicle (1) according to claim 6, **characterized in that** the power supply line (10) is supported on the traction cable (26) at least in some sections, wherein the traction cable (26) forms a supporting cable (T) to support the power supply line (10).

8. The piste maintenance vehicle (1) according to any of the preceding claims, **characterized in that** the traction cable (26) and the power supply line (10) are integrated in a common strand cross-section (Q).

9. The piste maintenance vehicle (1) according to any of the preceding claims, **characterized in that** the drive system (7) has a buffer power source (31), by means of which at least the track drive (8) is alternatively supplied with electrical operating energy when there is no coupled operation.

10. The piste maintenance vehicle (1) according to claim 9, **characterized in that** the buffer power source (31) has a battery system (32) which is chargeable in coupled operation and/or by means of recuperation.

## Revendications

1. Véhicule d'entretien des pistes (1) pour l'entretien d'une piste de ski ou de snowboard (P) recouverte de neige, présentant un système d'entraînement (7) avec au moins un entraînement de train de roulement (8) fonctionnant électriquement qui est prévu pour faire avancer le véhicule d'entretien des pistes (1), et présentant un câble d'alimentation électrique flexible (10) qui est prévu pour alimenter le système d'entraînement (7) en énergie électrique de fonctionnement, sachant qu'un mode de couplage est prévu dans lequel le câble d'alimentation électrique (10) est relié de manière électriquement conductrice au système d'entraînement (7) d'un côté et à une source d'énergie de fonctionnement (13) disposée de manière fixe au niveau de la piste (P), de l'autre côté, sachant qu'est prévu un dispositif d'enroulement (15) associé au câble d'alimentation électrique, au moyen duquel le câble d'alimentation électrique (10) en mode de couplage est enroulable ou déroulable d'une façon adaptée au mouvement d'avancée du véhicule d'entretien des pistes (1), sachant que le dispositif d'enroulement (15) présente un tambour d'enroulement (16) monté de manière rotative, sur lequel le câble d'alimentation électrique (10) est maintenu de manière enroulable ou déroulable, **caractérisé en ce qu'**un câble de traction (26) est prévu pour le soutien par force de traction du mouvement d'avancée du véhicule d'entretien des pistes (1), sachant que le câble de traction (26) est maintenu sur le tambour d'enroulement (16) de manière enroulable ou déroulable, au moyen du dispositif d'enroulement (15).

2. Véhicule d'entretien des pistes (1) selon la revendication 1, **caractérisé en ce qu'**est associé au dispositif d'enroulement (15) un bras en porte-à-faux (17) au moyen duquel le câble d'alimentation électrique (10) est guidé.

3. Véhicule d'entretien des pistes (1) selon la revendication 1 ou 2, **caractérisé en ce qu'**est prévue une unité de commande (18) reliée au dispositif d'enroulement (15) qui est conçue pour commander un mouvement d'enroulement et de déroulement du dispositif d'enroulement (15) selon le mouvement d'avancée du véhicule d'entretien des pistes.

4. Véhicule d'entretien des pistes (1) selon la revendication 3, **caractérisé en ce qu'**est prévue une unité d'acquisition (21) reliée à l'unité de commande (18), qui est configurée pour acquérir une position du véhicule d'entretien des pistes (1) par rapport à la source d'énergie de fonctionnement (13) et/ou une grandeur de mouvement du véhicule d'entretien des pistes (1) et/ou une force de traction agissant sur le câble d'alimentation électrique (10).

5. Véhicule d'entretien des pistes (1) selon la revendication 2, **caractérisé en ce que** le câble de traction (26) est guidé au moyen du bras en porte-à-faux (17).

6. Véhicule d'entretien des pistes (1) selon l'une des revendications précédentes, **caractérisé en ce que** le câble de traction (26) et le câble d'alimentation électrique (10) forment, en mode de couplage, un agencement de faisceau (A) s'étendant parallèlement au moins partiellement.

7. Véhicule d'entretien des pistes (1) selon la revendication 6, **caractérisé en ce que** le câble d'alimentation électrique (10) s'appuie au moins partiellement sur le câble de traction (26), sachant que le câble de traction (26) forme un câble porteur (T) pour l'appui du câble d'alimentation électrique (10).

8. Véhicule d'entretien des pistes (1) selon l'une des revendications précédentes, **caractérisé en ce que** le câble de traction (26) et le câble d'alimentation électrique (10) sont intégrés dans une section de faisceau (Q) commune.

9. Véhicule d'entretien des pistes (1) selon l'une des revendications précédentes, **caractérisé en ce que** le système d'entraînement (7) présente une source d'énergie tampon (31) au moyen de laquelle au moins l'entraînement de train de roulement (8) est alimenté de manière auxiliaire en énergie électrique de fonctionnement si aucun mode de couplage n'est activé.

10. Véhicule d'entretien des pistes (1) selon la revendication 9, **caractérisé en ce que** la source d'énergie tampon (31) présente un système de batterie (32) qui est rechargeable en mode de couplage et/ou par récupération.
